# EUROPÄISCHE PATENTSCHRIFT

(11) **EP 4 001 827 B1**
(45) Veröffentlichungstag und Bekanntmachung des Hinweises auf die Patenterteilung: **18.03.2026**
(21) Anmeldenummer: 20207042.1
(22) Anmeldetag: 11.11.2020
(51) Int. Cl.: G01B 5/12, G01B 5/20

(54) **VERFAHREN ZUM VERMESSEN EINES WERKSTÜCKS**
METHOD OF MEASURING A WORKPIECE
PROCÉDÉ DE MESURE D'UNE PIÈCE

(43) Veröffentlichungstag der Anmeldung: 25.05.2022
(73) Patentinhaber: Klingelnberg GmbH, 42499 Hückeswagen (DE)
(72) Erfinder: Merkert, Benjamin, 51688 Wipperfürth (DE)
(74) Vertreter: Janke Scholl Patentanwälte PartG mbB

(56) Entgegenhaltungen:
- DE-A1- 2 148 976
- US-A- 4 167 066
- US-A1- 2010 119 104
- US-A1- 2011 184 695
- US-A1- 2015 377 617
- US-A1- 2019 339 053

## Beschreibung

Die vorliegende Erfindung betrifft ein Verfahren zum Messen eines Werkstücks, mit den Verfahrensschritten: Bereitstellen eines Werkstücks, wobei das Werkstück eine Oberfläche mit einer Oberflächenstruktur aufweist; Vorgeben einer geometrischen Messgröße des Werkstücks, wobei die geometrische Messgröße ein Durchmesser des Werkstücks ist und wobei die geometrische Messgröße und eine Soll-Ist-Abweichung der geometrischen Messgröße in einer Referenzebene definiert sind; Vorgeben eines Messwegs; Taktiles Erfassen von Messwerten an dem Werkstück, in dem ein Messtaster mit der Oberfläche des Werkstücks in Anlage gebracht wird und der Messtaster das Werkstück in Anlage mit der Oberfläche entlang des vorgegebenen Messwegs abtastet; Rechnerisches Bestimmen der geometrischen Messgröße und der Soll-Ist-Abweichung der geometrischen Messgröße aus den Messwerten innerhalb der Referenzebene.

Werkstücke werden gemessen, um vorgegebene Qualitätsanforderungen zu erfüllen. Das eingangs genannte Verfahren dient dazu, eine Soll-Ist-Abweichung eines Durchmessers eines Werkstücks zu bestimmen. Die gemessene Soll-Ist-Abweichung kann bezüglich der Einhaltung einer vorgegebenen Toleranz abgeglichen werden.

Beim Messen des Durchmessers kann die Oberflächenstruktur der Oberfläche des Werkstücks dazu führen, dass das Messergebnis verfälscht wird. Soweit die Oberflächenstruktur z.B. Rillen, Riefen, Furchen oder dergleichen aufweist, wird der Messtaster beim Abfahren des Messwegs ggf. in den Tälern oder Einsenkungen dieser Rillen, Riefen, Furchen oder dergleichen geführt, so dass ein Durchmesser fehlerhaft gemessen wird.

Beispielsweise kann eine Oberflächenstruktur eines kreiszylindrischen Wellenabsatzes durch eine vorhergehende Drehbearbeitung eine spiralförmige Rille beschreiben, die sich um eine Mittelachse des kreiszylindrischen Wellenabsatzes windet. Während der Messung des Außendurchmessers dieses kreiszylindrischen Wellenabsatzes läuft der Messtaster mit seiner Tastkugel oder Tastspitze ggf. innerhalb dieser Rille, so dass nur das "Tal" der Oberflächenstruktur, also der lediglich der minimale Außendurchmesser erfasst wird, nicht jedoch der tatsächliche Außendurchmesser. Mit anderen Worten, soweit man eine solche spiralförmige Rille der Oberflächenstruktur in einer stark vergrößerten Form mit einem Außengewinde vergleicht, würde im schlechtesten Fall daher nur der Kerndurchmesser eines solchen Gewindes gemessen werden, nicht jedoch der Nenndurchmesser, da der Messtaster während der Messung zwischen den Gewindeflanken geführt ist.

Das Dokument US 2011/0184695 A1 beschreibt das Messen von Innendurchmessern mit einem spiralförmigen Messweg.

Vor diesem Hintergrund liegt der Erfindung die technische Problemstellung zugrunde, ein Verfahren anzugeben, das eine zuverlässige Messung eines Durchmessers eines Werkstücks ermöglicht, dessen Oberfläche eine Oberflächenstruktur aufweist.

Die voranstehend beschriebene technische Problemstellung wird durch ein Verfahren gemäß Anspruch 1 gelöst. Weitere Ausgestaltungen der Erfindung ergeben sich aus den abhängigen Ansprüchen und der nachstehenden Beschreibung.

Erfindungsgemäß wird ein Verfahren angegeben, mit den Verfahrensschritten: Bereitstellen eines Werkstücks, wobei das Werkstück eine Oberfläche mit einer Oberflächenstruktur aufweist; Vorgeben einer geometrischen Messgröße des Werkstücks, wobei die geometrische Messgröße ein Durchmesser des Werkstücks ist und wobei die geometrische Messgröße und eine Soll-Ist-Abweichung der geometrischen Messgröße in einer Referenzebene definiert sind; Vorgeben eines Messwegs; Taktiles Erfassen von Messwerten an dem Werkstück, in dem ein Messtaster mit der Oberfläche des Werkstücks in Anlage gebracht wird und der Messtaster das Werkstück in Anlage mit der Oberfläche entlang des vorgegebenen Messwegs abtastet; Rechnerisches Bestimmen der geometrischen Messgröße und der Soll-Ist-Abweichung der geometrischen Messgröße aus den Messwerten innerhalb der Referenzebene. Die Erfindung zeichnet sich dadurch aus, dass der vorgegebene Messweg zumindest teilweise außerhalb der Referenzebene liegt.

Entgegen vorbekannter Konventionen wird der Messweg daher gezielt zumindest abschnittsweise außerhalb derjenigen Referenzebene vorgegeben, in der die Messgröße "Durchmesser" an sich definiert ist, um auf diese Weise nicht nur Messwerte zum Durchmesser, sondern auch Messwerte zu der die Messung ggf. verfälschenden Oberflächenstruktur der Oberfläche zu erfassen. Auf diese Weise können Einflüsse der Oberflächenstruktur auf das Messergebnis erfasst und aus dem Messergebnis herausgerechnet werden. Beispielsweise kann vorgeben sein, dass der Messweg die Referenzebene in einem Punkt schneidet und/oder dass der Messweg und die Referenzebene höchstens einen gemeinsamen Punkt aufweisen.

Der Messtaster kann ein Messtaster mit einer Tastkugel sein, wobei die Tastkugel zur Anlage an dem Werkstück vorgesehen ist.

Die Tastkugel kann beispielsweise einen Durchmesser von 0,1 mm oder mehr aufweisen. Die Tastkugel kann beispielsweise einen Durchmesser von 1 mm oder mehr aufweisen. Die Tastkugel kann beispielsweise einen Durchmesser von 2 mm oder mehr aufweisen. Die Tastkugel kann beispielsweise einen Durchmesser von 10 mm oder weniger aufweisen. Die Tastkugel kann beispielsweise einen Durchmesser von 6 mm oder weniger aufweisen. Die Tastkugel kann beispielsweise einen Durchmesser von 4 mm oder weniger aufweisen.

Die Tastkugel kann beispielsweise eines der Materialien Rubin, Siliziumnitrid, Zirkonoxid, Keramik oder Hartmetall aufweisen oder aus einem der Materialien Rubin, Siliziumnitrid, Zirkonoxid, Keramik oder Hartmetall bestehen.

Der Messtaster kann einen Stab aufweisen, an dem die Tastkugel endseitig gehalten ist. Der Stab kann beispielsweise eines der Materialien Stahl, Hartmetall, Keramik, Verbundwerkstoff, z.B. Kohlefaser, Aluminium oder Titan aufweisen oder aus einem der Materialien Stahl, Hartmetall, Keramik, Verbundwerkstoff, z.B. Kohlefaser, Aluminium oder Titan bestehen.

Der Messtaster kann ein scannender Messtaster und/oder ein schaltender Messtaster sein.

Wenn vorliegend davon gesprochen wird, dass die geometrische Messgröße ein Durchmesser des Werkstücks ist, also vom Messen eines Durchmessers gesprochen wird, so kann es sich dabei um das Messen eines Außendurchmessers oder das Messen eines Innendurchmessers des Werkstücks handeln.

Ein solcher Außendurchmesser kann beispielsweise an einer äußeren Mantelfläche eines kreiszylindrischen oder konischen Wellenabsatzes gemessen werden. Ein Innendurchmesser kann beispielsweise an einer inneren Mantelfläche einer kreiszylindrischen Ausnehmung, wie einer Bohrung oder dergleichen, oder einer konischen Ausnehmung gemessen werden.

Wenn vorliegend davon gesprochen wird, dass die geometrische Messgröße ein Durchmesser des Werkstücks ist, also vom Messen eines Durchmessers gesprochen wird, so kann es sich dabei um das Messen eines konstanten Durchmessers handeln, wie das Messen eines kreisrunden Querschnitts eines kreiszylindrisches Werkstückbereichs oder dergleichen. Alternativ kann es sich bei dem Messen eines Durchmessers um das Messen eines nicht konstanten Durchmessers handeln, wie das Messen eines elliptischen Querschnitts eines elliptischen Werkstückbereichs oder dergleichen. Es versteht sich, dass das Messen eines Durchmessers vorliegend ebenfalls das Messen eines Radius umfassen kann, und umgekehrt.

Die Referenzebene kann eine Ebene sein, die orthogonal zu einer Symmetrieachse eines Werkstückabschnitts des Werkstücks orientiert ist, also einen Winkel von 90 Grad mit der Symmetrieachse einschließt, an dem der Durchmesser gemessen wird. Beispielsweise kann die Referenzebene orthogonal zu einer zentralen Achse eines kreiszylindrischen Abschnitts eines Werkstücks orientiert sein, bezüglich derer der kreiszylindrische Abschnitt rotationssymmetrisch ist. Beispielsweise kann die Referenzebene orthogonal zu einer zentralen Achse eines elliptischen Abschnitts eines Werkstücks orientiert sein, bezüglich derer der elliptische Abschnitt des Werkstücks drehsymmetrisch ist.

Die Referenzebene kann eine Ebene sein, die nicht orthogonal zu einer Symmetrieachse eines Werkstückabschnitts des Werkstücks orientiert ist also einen Winkel ungleich 90 Grad mit der Symmetrieachse einschließt.

Die Referenzebene kann eine Planebene sein. Beispielsweise kann eine solche Planebene parallel zu einer Koordinatenebene eines kartesischen Koordinatensystems einer Messmaschine orientiert sein, mit der das gegenständliche Verfahren durchgeführt wird. Alternativ kann eine solche Planebene nicht parallel zu einer Koordinatenebene eines kartesischen Koordinatensystems einer Messmaschine orientiert sein, mit der das gegenständliche Verfahren durchgeführt wird.

Die Oberflächenstruktur des Werkstücks weist Rillen auf. Die Begriffe Rillen, Furchen und Riefen werden vorliegend synonym verwendet. Es kann vorgesehen sein, dass die Rillen eine Breite von mehr als 10 µm und weniger als 500 µm aufweisen. Es kann vorgesehen sein, dass die Rillen eine Breite von mehr als 10 µm und weniger als 100 µm aufweisen. Es kann vorgesehen sein, dass die Rillen eine Breite von mehr als 10 µm und weniger als 100 µm aufweisen. Es kann vorgesehen sein, dass die Rillen eine Breite von mehr als 10 µm und weniger als 50 µm aufweisen. Es kann vorgesehen sein, dass die Rillen eine Tiefe von mehr als 3 µm und weniger als 50 µm aufweisen. Es kann vorgesehen sein, dass die Rillen eine Tiefe von mehr als 3 µm und weniger als 20 µm aufweisen. Es kann vorgesehen sein, dass die Rillen eine Tiefe von mehr als 5 µm und weniger als 15 µm aufweisen, insbesondere eine Tiefe 10 µm oder weniger aufweisen.

Die Rillen sind zumindest abschnittsweise schraubenlinienförmig. Insbesondere können die Rillen vollständig schraubenlinienförmig sein. Die Rillen weisen in Bezug auf die Referenzebene eine Neigung und eine Drehrichtung auf.

Erfindungsgemäß ist vorgesehen, dass die Neigung und/oder die Drehrichtung der Rillen anhand von Fertigungsparametern einer Werkstückbearbeitung bestimmt werden, die dem Bereitstellen des Werkstücks vorangegangen ist. Beispielsweise kann es sich dabei um Fertigungsparameter aus einer vorangegangenen Drehbearbeitung handeln, wie zum Beispiel der Werkstückdrehzahl, der Schnittgeschwindigkeit, der Zustellung und dem Vorschub der Drehbearbeitung. Beispielsweise kann die Drehbearbeitung als Außenlängsdrehen mit einem Drehmeißel durchgeführt worden sein.

Alternativ oder ergänzend werden die Neigung und/oder die Drehrichtung bzw. Orientierung der Rillen erfindungsgemäß vor und/oder während des taktilen Messens erfasst.

Die Begriffe Orientierung, Drehrichtung und Drehsinn werden vorliegend synonym verwendet.

Es kann vorgesehen sein, dass der Messweg unter Berücksichtigung der Neigung und/oder der Drehrichtung der Rillen vorgegeben bzw. definiert wird.

Der Messweg kreuzt die Rillen und weist zumindest abschnittsweise eine von den Rillen abweichende Neigung und/oder Drehrichtung auf. Der Messweg kann daher gezielt quer und/oder gegenläufig zur Neigung und/oder Drehrichtung der Rillen verlaufen, um auf diese Weise ein Profil der Rillen zu messen. Insbesondere können eine Breite und/oder eine Tiefe von Rillen der Oberflächenstruktur entlang des Messwegs gemessen werden.

Der Messweg ist zumindest abschnittsweise schraubenlinienförmig. Insbesondere kann vorgesehen sein, dass der Messweg vollständig schraubenlinienförmig ist. Beispielsweise kann der Messweg zumindest abschnittsweise oder vollständig schraubenlinienförmig ausgebildet sein, soweit z.B. ein Durchmesser an einem kreiszylindrischen Werkstückabschnitt gemessen wird.

Insbesondere kann vorgesehen sein, dass der Messweg zumindest abschnittsweise spiralförmig ist. Insbesondere kann vorgesehen sein, dass der Messweg vollständig spiralförmig ist. Beispielsweise kann der Messweg zumindest abschnittsweise oder vollständig als konische Spirale ausgebildet sein, soweit z.B. ein Durchmesser an einem konischen Werkstückabschnitt gemessen wird.

Um das Messergebnis zu verbessern, kann vorgesehen sein, dass während des taktilen Messens zwei oder mehr Messwege abgetastet werden und dass sich die Messwege hinsichtlich eines Parameters oder hinsichtlich mehrerer der nachfolgend genannten Parameter unterscheiden: Startpunkt des Messwegs, Endpunkt des Messwegs, Länge des Messwegs, Drehrichtung bzw. Orientierung des Messwegs, Neigung des Messwegs. Auf diese Weise kann ein Profil der Oberfläche bzw. die Oberflächenstruktur zuverlässig erfasst werden.

Das Messen mit zwei oder mehr Messwegen kann dazu dienen, die Neigung und/oder Drehrichtung der Rillen taktil zu erfassen. So kann das Messen mit zwei oder mehr Messwegen insbesondere als vorbereitende Messung für eine Serie von nachfolgenden Messungen dienen, um für nachfolgende Messungen einen einzelnen Messweg festzulegen, der die Rillen kreuzt. So kann für eine Serie von Bauteilen zunächst an einem Bauteil die Neigung und/oder Drehrichtung der Rillen mit zwei oder mehr Messwegen erfasst werden, um anschließend die Messung aller nachfolgenden Bauteile mit einem daraus abgeleiteten einzelnen Messweg zügiger durchführen zu können.

Insbesondere können die Steigung und/oder die Drehrichtung der Rillen automatisiert erfasst werden.

Es kann vorgesehen sein, dass ein erster Messweg und ein zweiter Messweg vorgegeben werden, wobei ein Startpunkt des ersten Messwegs und ein Startpunkt des zweiten Messwegs in einer gemeinsamen Startebene liegen, wobei die Startebene insbesondere parallel zur Referenzebene orientiert ist, und/oder wobei ein Endpunkt des ersten Messwegs und ein Endpunkt des zweiten Messwegs in einer gemeinsamen Endebene liegen, wobei die Endebene insbesondere parallel zur Referenzebene orientiert ist, und/oder der erste Messweg und der zweite Messweg einen Winkelversatz zueinander aufweisen. Auch dieses Vorgehen ermöglicht eine verbesserte Erfassung der Oberflächenstruktur bzw. eines Profils der Oberfläche, um den Einfluss der Oberflächenstruktur aus das Messergebnis des Durchmessers zu bestimmten.

Es kann vorgesehen sein, dass die erfassten Messwerte auf die Referenzebene projiziert werden. Auf diese Weise ergibt sich innerhalb der Referenzebene z.B. für das Messen eines Außendurchmessers z.B. ein Hüllkreis bzw. ein maximal gemessener Außendurchmesser und ein Pferchkreis bzw. ein minimal gemessener Außendurchmesser. Um einen gemessenen Istwert für den Durchmesser zu bestimmen, kann alternativ oder ergänzend vorgegeben sein, dass durch Ausgleichsrechnung aus den Messwerten ein Best-Fit-Durchmesser nach der Methode der kleinsten Fehlerquadrate bestimmt und als gemessener Ist-Durchmesser definiert wird.

Das Werkstück kann während der Messung um eine Werkstücklängsachse rotiert werden. Dabei kann der Messtaster radial in Richtung des Werkstücks zugestellt werden. Beispielsweise kann vorgesehen sein, dass eine Werkstücklängsachse, die beispielsweise eine voranstehend beschriebene Symmetrieachse sein kann, kollinear zu einer Drehachse orientiert ist, um die das Werkstück während der Messung rotiert. Eine solche Drehachse kann beispielsweise eine Werkstückspindelachse eines Drehtisches einer Messmaschine sein, wobei das Werkstück an dem Drehtisch aufgespannt ist. Es kann daher vorgesehen sein, dass das Werkstück während der Messung, d. h. beim Abfahren des Messwegs, um seine eigene Achse gedreht wird.

Es kann vorgesehen sein, dass der Messtaster während des taktilen Erfassens von Messwerten an dem Werkstück in jeder Raumrichtung frei bewegbar ist und in keiner Raumrichtung gesperrt ist. Die ggf. auftretende Verfälschung einer Messung des Durchmessers durch die Oberflächenstruktur des Werkstücks wird daher vorliegend nicht durch das Sperren des Messtasters in einer oder mehrerer Koordinatenrichtungen ausgeglichen, sondern durch das gezielte Definieren des Messwegs außerhalb der Referenzebene des zu messenden Durchmessers bzw. zumindest abschnittsweise außerhalb der Referenzebene des zu messenden Durchmessers.

Nachfolgend wird die Erfindung anhand einer Ausführungsbeispiele darstellenden Zeichnung näher beschrieben. Es zeigen jeweils schematisch:
- FIG. 1A: ein zu messendes Werkstück in einer Frontansicht entlang seiner Längsachse;
- FIG. 1B: das Werkstück aus Fig. 1A in einem Längsschnitt IB-IB gemäß Fig. 1A;
- FIG. 1C: eine vergrößerte Darstellung einer Messsituation;
- Fig. 2A: das Werkstück aus Fig. 1B mit einem erfindungsgemäßen Messweg;
- Fig. 2B: das Werkstück aus Fig. 1A mit einem erfindungsgemäßen Messweg;
- Fig. 3A: ein zu messendes Werkstück in einem Längsschnitt mit drei erfindungsgemäßen Messwegen;
- Fig. 3B: das Werkstück aus Fig. 1A in einer Frontansicht entlang seiner Längsachse;
- Fig. 3C: auf die Referenzebene projizierte Messwerte der Messwege;
- Fig. 4: ein Ablaufdiagramm des erfindungsgemäßen Verfahrens.

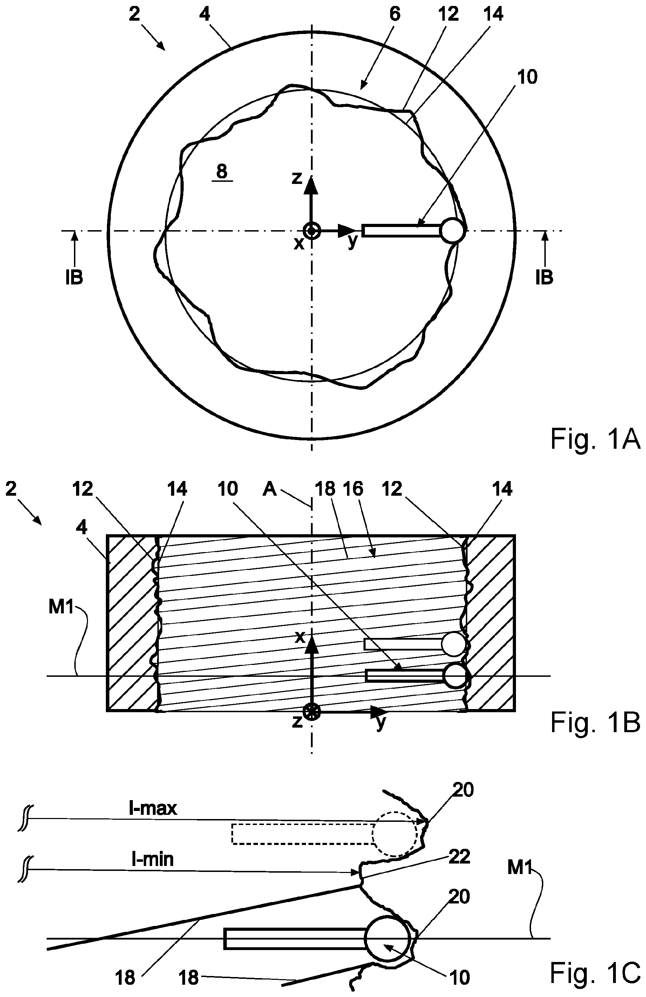

Zunächst wird mit Bezug zu den Figuren 1A, 1B und 1C die der Erfindung zugrundeliegende Problemstellung erläutert.

In Figur 1A ist ein Werkstück 2 dargestellt. Bei dem Werkstück 2 handelt es sich um einen Hohlzylinder 2 mit einer kreiszylindrischen äußeren Mantelfläche 4 und mit einer kreiszylindrischen inneren Mantelfläche 6, die eine Durchgangsöffnung 8 begrenzt.

Für die innere Mantelfläche 6 soll deren Durchmesser mithilfe eines Messtasters 10 gemessen werden. Die Linie 12 repräsentiert in einer stark schematisierten, übertriebenen Darstellung den zu messenden Ist-Durchmesser der inneren Mantelfläche 6. Der Kreis 14 repräsentiert den vorgegebenen Soll-Durchmesser 14 der inneren Mantelfläche 6, der bei der Fertigung der Durchgangsöffnung 8 erreicht werden sollte.

Ein solcher Durchmesser wird üblicherweise innerhalb einer vordefinierten Referenzebene M1 gemessen, die in der Schnittdarstellung gemäß Fig. 1B gezeigt ist. Die Referenzebene M1 ist parallel zur Koordinatenebene y-z erstreckt. Der x-Wert gemäß dem kartesischen Koordinatensystem x, y, z ist daher für jeden Punkt der Ebene M gleich.

Mit anderen Worten soll der Messtaster 10 während der gesamten Messung des Durchmessers in x-Richtung betrachtet auf einer konstanten Position gehalten werden, sodass der Messtaster 10 während der gesamten Messung des Durchmessers innerhalb der Referenzebene M1 verbleibt bzw. ausschließlich Messwerte innerhalb der Referenzebene M aufzeichnet. Üblicherweise wird bei einer derartigen Messaufgabe das Werkstück 2, um seine Längsachse A rotiert, die kollinear zur x-Achse ist, sodass der Messtaster 10 ausschließlich Auslenkungen in y-Richtung erfährt und aufzeichnet.

Je nachdem, wie die Durchgangsöffnung 8 an dem Werkstück 2 hergestellt worden ist, weist das Werkstück 2 im Bereich der inneren Mantelfläche 6 eine Oberflächenstruktur 16 auf, die vorliegend in Fig. 1B durch die geneigt zur y-z-Ebene verlaufenden Rillen 18 dargestellt ist.

Diese Rillen 18 der Oberflächenstruktur 16 können beispielsweise dadurch entstanden sein, dass die Durchgangsöffnung 8 durch Innendrehen mit einem Drehmeißel hergestellt worden ist. Die Rillen 18, die hier auch als Drehrillen 18 bezeichnet werden können, sind im Wesentlichen schraubenlinienförmig um die x-Achse gewunden und können während der Messung zu einer ungewollten Führung und zu einer damit einhergehenden Auslenkung des Messtasters in x-Richtung führen, wie in Fig. 1B angedeutet.

Diese Führung und Auslenkung des Messtasters 10 aus der Referenzebene M1 kann dadurch entstehen, dass der Messtaster 10 während der Messung infolge der Rotation des Werkstücks 2 um die Achse A innerhalb der Rillen 18 geführt und durch die Rillen nach Art eines Schnecken- oder Kugelgewindegetriebes, je nach Drehrichtung des Werkstücks 2, in positive oder negative x-Richtung verschoben wird.

Die Herausforderung ist hierbei zunächst nicht die Verschiebung des Messtasters in x-Richtung, die in einfacher Weise rechnerisch aus dem Messergebnis eliminiert werden kann, sondern vielmehr die Tatsache, dass der Messtaster 10 innerhalb der Rillen 18 während der Messung ausschließlich in Tälern 20 der Rillen 18 läuft und Spitzen 22 der Rillen 18 nicht abtastet, wie in Fig. 1C veranschaulicht.

Somit erfasst der Messtaster 10 lediglich den maximalen Innendurchmesser I-max der Durchgangsöffnung 8, jedoch nicht den minimalen Durchmesser I-min der Durchgangsöffnung 8. Dadurch, dass der Messtaster 10 durch die im Wesentlichen schraubenlinienförmige Oberflächenstruktur 18 geführt wird, wird das Messergebnis daher verfälscht. Die Messung ergibt in der Folge einen zu großen Ist-Wert für den hier gemessenen Innendurchmesser der Durchgangsöffnung 8. Soweit ein Außendurchmesser gemessen werden würde, ergäbe sich durch eine solche Führung des Messtasters in den Rillen ein zu klein gemessener Ist-Wert für den gemessenen Außendurchmesser.

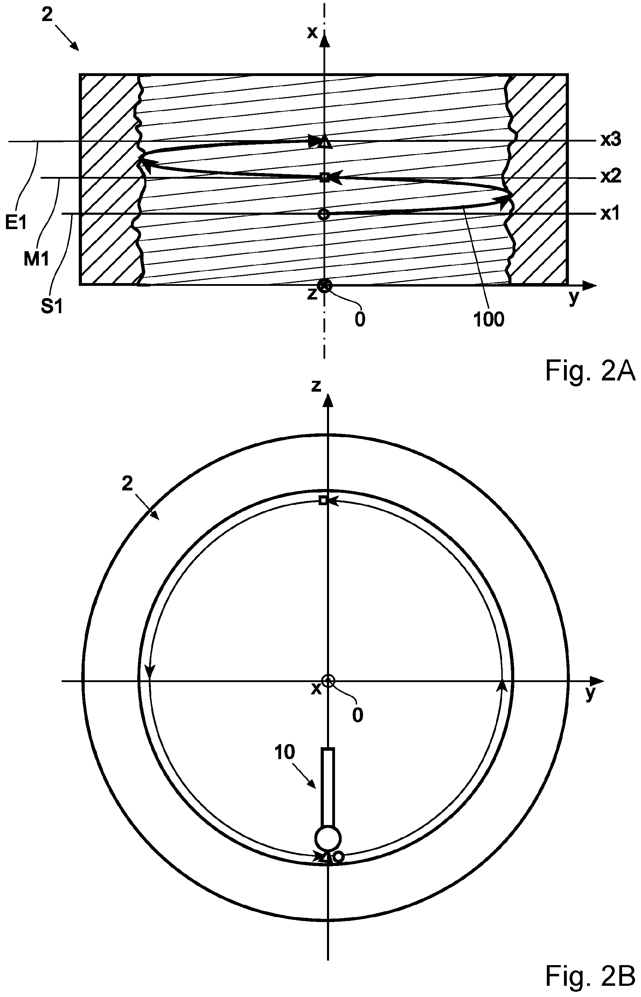

Für das Werkstück 2 wird dieses Problem erfindungsgemäß dadurch gelöst, dass ein Messweg 100 vorgegeben bzw. definiert wird, der zumindest abschnittsweise außerhalb der Referenzebene M1 liegt, innerhalb derer der zu messende Durchmesser liegt (Fig. 2A, Fig. 2B).

Der vorgegebene Messweg 100 startet an einem Startpunkt in einer Startebene S1, die einen Abstand zur der Referenzebene M1 aufweist. Der vorgegebene Messweg 100 endet an einem Endpunkt in einer Endebene E1, die einen Abstand zur der Referenzebene M1 aufweist (Fig. 2A, Fig. 2B). Der Messweg 100 schneidet die Referenzebene M1 in einem Schnittpunkt. Der Startpunkt ist durch einen Kreis, der Schnittpunkt durch ein Quadrat und der Endpunkt durch ein Dreieck gekennzeichnet.

Die Referenzebene M1, die Startebene S1 und die Endebene E1 sind parallel zur Koordinatenebene y-z orientiert. Die Startebene S1 liegt in x-Richtung auf der Höhe x1, die Referenzebene M auf der Höhe x2 und die Endebene E1 auf der Höhe x3, wobei gilt, dass x1 < x2 < x3.

Die im Wesentlichen schraubenlinienförmigen Rillen 18 weisen bezogen auf die x-Achse eine negative Drehrichtung auf während der Messweg 100 dazu gegenläufig eine positive Drehrichtung aufweist. Mit anderen Worten sind die schraubenlinienförmigen Rillen 18 rechtssteigend während der Messweg 100 linkssteigend ist.

Der Messweg 100 kreuzt die Rillen 18 daher während der Messung, so dass der Messtaster 10 in x-Richtung sowohl die Täler 20 der Rillen 18 durchläuft als auch die Spitzen 22 der Rillen 18 abtastet. Demnach kann durch den Messweg 100 während der Messung des Durchmessers das Profil der Rillen 18 miterfasst werden.

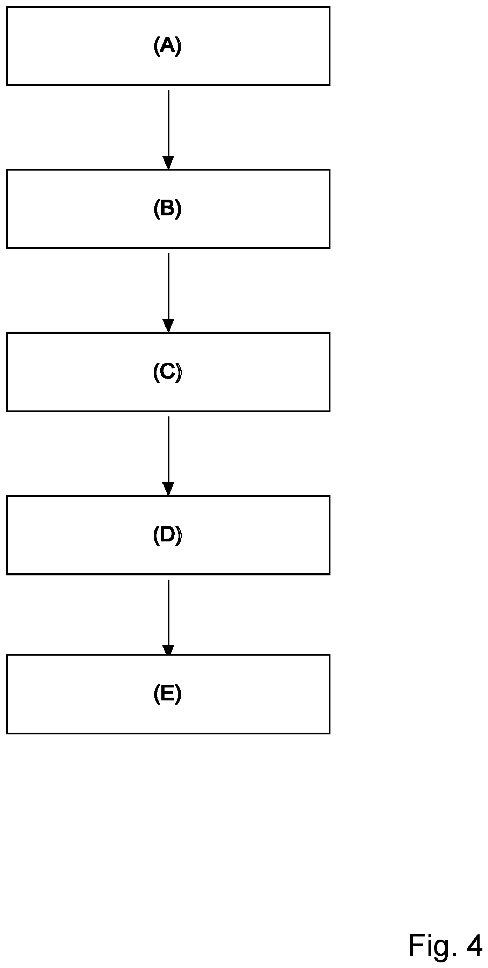

Es wird daher ein erstes erfindungsgemäßes Verfahren angegeben, mit den Verfahrensschritten (Fig. 4):
(A) Bereitstellen eines Werkstücks 2, wobei das Werkstück 2 eine Oberfläche 6 mit einer Oberflächenstruktur 16 aufweist, wobei die Oberflächenstruktur 16 des Werkstücks 2 Rillen 18 aufweist, die Rillen 18 schraubenlinienförmig sind und die Rillen 18 in Bezug auf die Referenzebene M1 eine Neigung und eine Drehrichtung aufweisen;
(B) Vorgeben einer geometrischen Messgröße des Werkstücks 2, wobei die geometrische Messgröße ein Durchmesser des Werkstücks 2 ist und wobei die geometrische Messgröße und eine Soll-Ist-Abweichung der geometrischen Messgröße in einer Referenzebene M1 definiert sind;
(C) Vorgeben eines Messwegs 100, wobei der vorgegebene Messweg 100 zumindest teilweise außerhalb der Referenzebene M1 liegt, der Messweg 100 die Rillen 18 kreuzt und eine von den Rillen 18 abweichende Drehrichtung aufweist und der Messweg 100 schraubenlinienförmig ist;
(D) Taktiles Erfassen von Messwerten an dem Werkstück, in dem ein Messtaster 10 mit der Oberfläche 6 des Werkstücks 2 in Anlage gebracht wird und der Messtaster 10 das Werkstück 2 in Anlage mit der Oberfläche 6 entlang des vorgegebenen Messwegs 100 abtastet;
(E) Rechnerisches Bestimmen der geometrischen Messgröße und der Soll-Ist-Abweichung der geometrischen Messgröße aus den Messwerten innerhalb der Referenzebene M1, wobei die erfassten Messwerte auf die Referenzebene projiziert werden.

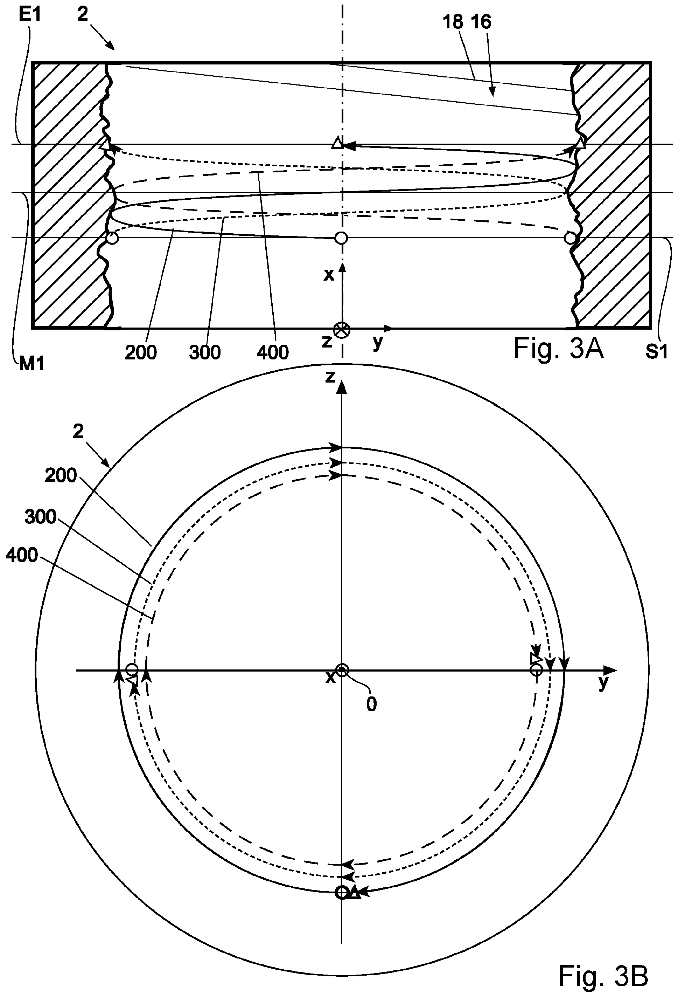

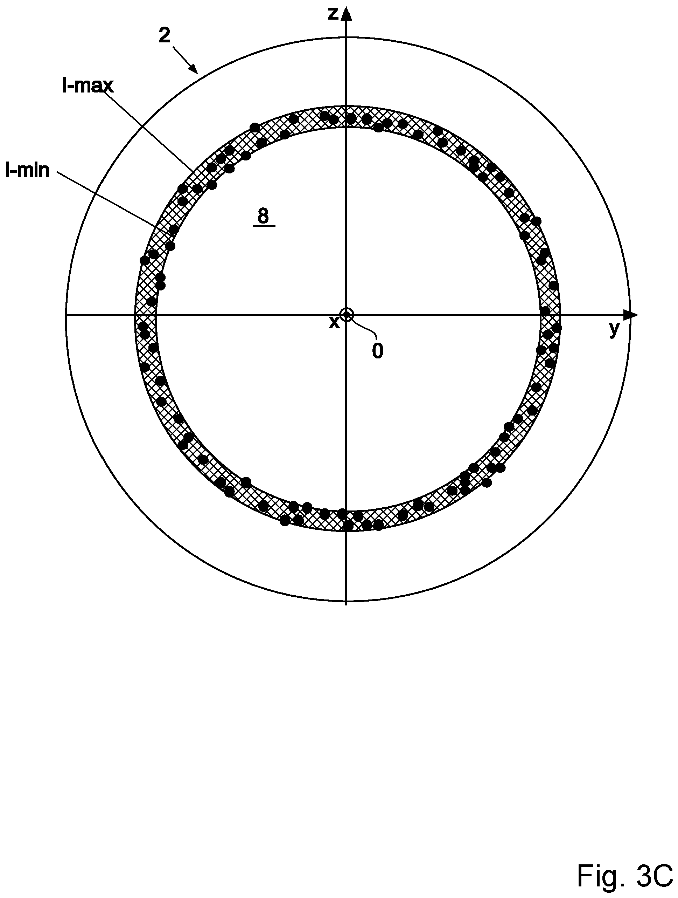

Nachfolgend wird eine weitere Ausgestaltung des Verfahrens mit Bezug zu den Figuren 3A, 3B, 3C beschrieben, wobei lediglich auf die Unterschiede zu dem vorstehend beschriebenen Ausführungsbeispiel eingegangen wird und im Wesentlichen gleichen Merkmalen gleiche Bezugszeichen zugeordnet werden.

Figur 3A zeigt ein Werkstück 2, das sich dadurch von dem voranstehend beschriebenen Beispiel unterscheidet, dass eine Oberflächenstruktur 16 Rillen 18 aufweist, die den zuvor mit Bezug zu den Figuren 1 und 2 beschriebenen Rillen 18 gegenläufig sind.

Zur besseren Anschaulichkeit sind lediglich zwei Rillen 18 in Figur 3A gezeigt. Um das Profil der Oberflächenstruktur 16 besser erfassen zu können, wird für die vorliegend beschriebene Verfahrensvariante nicht nur ein Messweg vorgegeben, sondern es werden drei Messwege vorgegeben. Es werden daher ein erster Messweg 200 definiert, ein zweiter Messweg 300 definiert und ein dritter Messweg 400 definiert.

Die Startpunkte der jeweiligen Messwege 200, 300, 400 liegen alle in ein und derselben Startebene S1 und sind jeweils durch Kreise gekennzeichnet. Die Endpunkte der jeweiligen Messwege 200, 300, 400 sind durch Dreiecke gekennzeichnet und liegen alle in derselben Endebene E1. Jeder der Messwege 200, 300, 400 schneidet die Referenzebene M1 lediglich jeweils in einem Punkt.

Jeder der Messwege 200, 300, 400 weist eine von den Rillen 18 abweichende bzw. gegensinnige Drehrichtung auf, ist im Wesentlichen schraubenlinienförmig und kreuzt die Rillen 18.

Die Messwege 200, 300, 400 unterscheiden sich dadurch voneinander, dass deren Startpunkte innerhalb der Startebene S1 jeweils einen Winkelversatz zueinander aufweisen. Gleichermaßen weisen auch die Endpunkte der jeweiligen Messwege 200, 300, 400 in der Endebene E2 jeweils einen Winkelversatz zueinander auf. Durch diese ineinander verschachtelt angeordneten Messspiralen 200, 300, 400, können unterschiedliche Bereiche der Oberflächenstruktur 16 erfasst und im Rahmen der rechnerischen Bestimmung des Durchmessers berücksichtigt werden.

Das Ergebnis der Messungen sind insbesondere Profilschriebe der Rillen 18 (nicht dargestellt), die übereinandergelegt werden können, um das Rillenprofil, die Neigung und die Drehrichtung der Rillen zu bestimmen,

In der Darstellung gemäß Figur 3B sind die Messwege radial eingerückt mit einem Abstand zueinander dargestellt. Dies ist jedoch nur zur Verdeutlichung der jeweiligen Stadt- und Endpunkte der Messwege 200, 300, 400 in der Draufsicht erfolgt, wobei klar ist, dass jeder der Messwege 200, 300, 400 denselben Durchmesser als geometrische Messgröße zum Gegenstand hat.

In Figur 3C sind die auf die Referenzebene projizierten Messpunkte aus den Messungen entsprechend der Messwege 200, 300, 400 gezeigt. Hieraus lässt sich ein Hüllkreis bzw. ein maximal gemessener Durchmesser I-max und ein Pferchkreis bzw. ein minimal gemessener Durchmesser I-min bestimmen. Als Messergebnis kann durch Ausgleichsrechnung aus den Messwerten ein Best-Fit-Durchmesser nach der Methode der kleinsten Fehlerquadrate bestimmt und als gemessener Ist-Durchmesser definiert werden. Dieser gemessene Ist-Durchmesser kann dann mit dem vorgegebenen Soll-Durchmesser abgeglichen werden, um zu prüfen, ob eine vorgegebene Toleranz für die Durchgangsöffnung 8 eingehalten worden ist.

Es wird daher ein zweites erfindungsgemäßes Verfahren angegeben, mit den Verfahrensschritten:
(A) Bereitstellen eines Werkstücks 2, wobei das Werkstück 2 eine Oberfläche 6 mit einer Oberflächenstruktur 16 aufweist, wobei die Oberflächenstruktur 16 des Werkstücks 2 Rillen 18 aufweist, die Rillen 18 zumindest schraubenlinienförmig sind und die Rillen 18 in Bezug auf die Referenzebene M1 eine Neigung und eine Drehrichtung aufweisen;
(B) Vorgeben einer geometrischen Messgröße des Werkstücks 2, wobei die geometrische Messgröße ein Durchmesser des Werkstücks 2 ist und wobei die geometrische Messgröße und eine Soll-Ist-Abweichung der geometrischen Messgröße in einer Referenzebene M1 definiert sind;
(C) Vorgeben dreier Messwege 200, 300, 400, wobei die vorgegebenen Messwege 200, 300, 400 zumindest teilweise außerhalb der Referenzebene M1 liegen, die Messwege 200, 300, 400 die Rillen 18 kreuzen und eine von den Rillen 18 abweichende Drehrichtung aufweisen und die Messwege 200, 300, 400 schraubenlinienförmig sind, wobei die Startpunkte der Messwege 200, 300, 400 in einer gemeinsamen Startebene S1 liegen, wobei die Startebene S1 parallel zur Referenzebene M1 orientiert ist, wobei die Endpunkte der Messwege 200, 300, 400 in einer gemeinsamen Endebene E1 liegen, wobei die Endebene E1 insbesondere parallel zur Referenzebene M1 orientiert ist und die Messwege 200, 300, 400 einen Winkelversatz zueinander aufweisen;
(D) Taktiles Erfassen von Messwerten an dem Werkstück. 2, in dem ein Messtaster 10 mit der Oberfläche 6 des Werkstücks 2 in Anlage gebracht wird und der Messtaster 10 das Werkstück 2 in Anlage mit der Oberfläche 6 entlang der vorgegebenen Messwege 200, 300, 400 abtastet;
(E) Rechnerisches Bestimmen der geometrischen Messgröße und der Soll-Ist-Abweichung der geometrischen Messgröße aus den Messwerten innerhalb der Referenzebene M1, wobei die erfassten Messwerte auf die Referenzebene M1 projiziert werden.

Das Messen mit drei Messwegen 200, 300, 400 kann dazu dienen, die Neigung und/oder Drehrichtung der Rillen 18 taktil zu erfassen. So kann das Messen mit den drei Messwegen 200, 300, 400 insbesondere als vorbereitende Messung für eine Serie von nachfolgenden Messungen dienen, um für nachfolgende Messungen einen einzelnen Messweg festzulegen, der die Rillen 18 kreuzt. Dieser einzelne Messweg kann einer der Messwege 200, 300, 400 oder ein davon verschiedener, weiterer Messweg sein, der die Rillen 18 kreuzt (nicht dargestellt). So kann für eine Serie von Bauteilen zunächst an einem Bauteil die Neigung und/oder Drehrichtung der Rillen 18 mit drei Messwegen erfasst werden, um anschließend die Messungen aller nachfolgenden Bauteile mit einem daraus abgeleiteten, einzelnen Messweg zeitsparender durchzuführen. Der einzelne Messweg kann eine von den Messwegen 200, 300, 400 verschiedene Neigung und/oder Orientierung und/oder Startebene und/oder Endebene haben.

### Bezugszeichen

- 2: Werkstück / Hohlzylinder
- 4: Äußere Mantelfläche
- 6: Innere Mantelfläche
- 8: Durchgangsöffnung
- 10: Messtaster
- 12: Ist-Durchmesser
- 14: Soll-Durchmesser
- 16: Oberflächenstruktur
- 18: Rillen
- 20: Tal
- 22: Spitze
- 100: Messweg
- 200: Messweg
- 300: Messweg
- 400: Messweg
- M1: Referenzebene
- S1: Startebene
- E1: Endebene
- I-max: Durchmesser
- I-min: Durchmesser
- (A): Verfahrensschritt
- (B): Verfahrensschritt
- (C): Verfahrensschritt
- (D): Verfahrensschritt
- (E): Verfahrensschritt

## Patentansprüche

1. Verfahren zum Messen eines Werkstücks, mit den Verfahrensschritten:
- Bereitstellen eines Werkstücks (2), wobei das Werkstück (2) eine Oberfläche (6) mit einer Oberflächenstruktur (16) aufweist;
- Vorgeben einer geometrischen Messgröße des Werkstücks (2),
- wobei die geometrische Messgröße ein Durchmesser des Werkstücks (2) ist und
- wobei die geometrische Messgröße und eine Soll-Ist-Abweichung der geometrischen Messgröße in einer Referenzebene (M1) definiert sind;
- Vorgeben eines Messwegs (100, 200, 300, 400);
- Taktiles Erfassen von Messwerten an dem Werkstück (2),
- in dem ein Messtaster (10) mit der Oberfläche (6) des Werkstücks (2) in Anlage gebracht wird und
- der Messtaster (10) das Werkstück (2) in Anlage mit der Oberfläche (6) entlang des vorgegebenen Messwegs (100, 200, 300, 400) abtastet;
- Rechnerisches Bestimmen der geometrischen Messgröße und der Soll-Ist-Abweichung der geometrischen Messgröße aus den Messwerten innerhalb der Referenzebene (M1);
- wobei der vorgegebene Messweg (100, 200, 300, 400) zumindest teilweise außerhalb der Referenzebene (M1) liegt und
- wobei der Messweg (100, 200, 300, 400) zumindest abschnittsweise schraubenlinienförmig ist,
**dadurch gekennzeichnet, dass**
- die Oberflächenstruktur (16) des Werkstücks Rillen (18) aufweist,
- die Rillen (18) zumindest abschnittsweise schraubenlinienförmig sind,
- die Rillen (18) in Bezug auf die Referenzebene (M1) eine Neigung und eine Drehrichtung aufweisen und
- der Messweg (100, 200, 300, 400) die Rillen (18) kreuzt und zumindest abschnittsweise eine von den Rillen (18) abweichende Neigung und/oder Drehrichtung aufweist,
- dass die Neigung und/oder die Drehrichtung der Rillen (18) anhand von Fertigungsparametern einer Werkstückbearbeitung bestimmt werden, die dem Bereitstellen des Werkstücks vorangegangen ist,
und/oder
- dass die Neigung und/oder Drehrichtung der Rillen (18) vor und/oder während des taktilen Messens erfasst wird.

2. Verfahren nach Anspruch 1,
**dadurch gekennzeichnet,**
- **dass** während des taktilen Messens zwei oder mehr Messwege (200, 300, 400) abgetastet werden und
- **dass** sich diese Messwege (200, 300, 400) hinsichtlich eines Parameters oder mehrerer der nachfolgend genannten Parameter unterscheiden: Startpunkt des Messwegs, Endpunkt des Messwegs, Länge des Messwegs, Drehrichtung des Messwegs, Neigung des Messwegs.

3. Verfahren nach Anspruch 2,
**dadurch gekennzeichnet,**
- **dass** ein erster Messweg (200, 300, 400) und ein zweiter Messweg (200, 300, 400) vorgegeben werden,
- wobei ein Startpunkt des ersten Messwegs (200, 300, 400) und ein Startpunkt des zweiten Messwegs (200, 300, 400) in einer gemeinsamen Startebene liegen, wobei die Startebene insbesondere parallel zur Referenzebene orientiert ist, und/oder
- wobei ein Endpunkt des ersten Messwegs (200, 300, 400) und ein Endpunkt des zweiten Messwegs in einer gemeinsamen Endebene liegen, wobei die Endebene insbesondere parallel zur Referenzebene orientiert ist,
und/oder
- der erste Messweg (200, 300, 400) und der zweite Messweg (200, 300, 400) einen Winkelversatz zueinander aufweisen.

4. Verfahren nach einem der voranstehenden Ansprüche,
**dadurch gekennzeichnet,**
- **dass** die erfassten Messwerte auf die Referenzebene (M1) projiziert werden.

5. Verfahren nach einem der voranstehenden Ansprüche,
**dadurch gekennzeichnet,**
- **dass** das Werkstück (2) während der Messung um eine Werkstücklängsachse (A) rotiert
und/oder
- wobei der Messtaster (10) während des taktilen Erfassens von Messwerten an dem Werkstück in jeder Raumrichtung frei bewegbar ist und in keiner Raumrichtung gesperrt ist.

## Claims

1. Method for measuring a workpiece, comprising the method steps of:
- providing a workpiece (2), wherein the workpiece (2) has a surface (6) with a surface structure (16);
- predefining a geometric measured variable of the workpiece (2),
- wherein the geometric measured variable is a diameter of the workpiece (2) and
- wherein the geometric measured variable and a nominal-actual deviation of the geometric measured variable are defined in a reference plane (M1);
- predefining a measuring path (100, 200, 300, 400);
- tactile sensing of measured values on the workpiece (2),
- by bringing a measuring probe (10) into contact with the surface (6) of the workpiece (2) and
- the measuring probe (10) scans the workpiece (2) in contact with the surface (6) along the predetermined measuring path (100, 200, 300, 400);
- computational determination of the geometric measured variable and the nominal-actual deviation of the geometric measured variable from the measured values within the reference plane (M1);
- wherein the predefined measuring path (100, 200, 300, 400) lies at least partially outside the reference plane (M1) and
- wherein the measuring path (100, 200, 300, 400) is helical at least in sections, **characterized in that**
the surface structure (16) of the workpiece comprises grooves (18),
the grooves (18) are helical at least in sections,
the grooves (18) have an inclination and a direction of rotation with respect to the reference plane (M1) and
the measuring path (100, 200, 300, 400) crosses the grooves (18) and, at least in sections, has an inclination and/or direction of rotation which deviates from the inclination and/or direction of rotation of the grooves (18),
the inclination and/or the direction of rotation of the grooves (18) are determined on the basis of manufacturing parameters of a workpiece machining operation which has preceded the provision of the workpiece,
and/or
that the inclination and/or direction of rotation of the grooves (18) is detected before and/or during tactile measurement.

2. Method according to one of the preceding claims,
**characterized**
- **in that** two or more measuring paths (200, 300, 400) are scanned during tactile measurement,
and
- **in that** these measuring paths (200, 300, 400) differ with respect to one or more of the following parameters: starting point of the measuring path, end point of the measuring path, length of the measuring path, direction of rotation of the measuring path, inclination of the measuring path.

3. Method according to claim 7,
**characterized**
- **in that** a first measuring path (200, 300, 400) and a second measuring path (200, 300, 400) are predefined,
- wherein a starting point of the first measuring path (200, 300, 400) and a starting point of the second measuring path (200, 300, 400) lie in a common starting plane, wherein the starting plane is oriented in particular parallel to the reference plane, and/or
- wherein an end point of the first measuring path (200, 300, 400) and an end point of the second measuring path lie in a common end plane, wherein the end plane is oriented in particular parallel to the reference plane, and/or
- the first measuring path (200, 300, 400) and the second measuring path (200, 300, 400) have an angular offset relative to one another.

4. Method according to one of the preceding claims,
**characterized**
- **in that** the acquired measured values are projected onto the reference plane (M1).

5. Method according to one of the preceding claims,
**characterized**
- **in that** the workpiece (2) rotates about a longitudinal workpiece axis (A) during measurement
and/or
- wherein the measuring probe (10) is freely movable in any spatial direction during the tactile sensing of measured values on the workpiece and is not blocked in any spatial direction.

## Revendications

1. Procédé de mesure d'une pièce, comprenant les étapes suivantes:
- mise à disposition d'une pièce (2), la pièce (2) présentant une surface (6) avec une structure de surface (16) ;
- définition d'une grandeur géométrique de mesure de la pièce (2),
- la grandeur géométrique mesurée étant un diamètre de la pièce à usiner (2) et
- la grandeur géométrique mesurée et un écart théorique/réel de la grandeur géométrique mesurée étant définis dans un plan de référence (M1) ;
- spécification d'un trajet de mesure (100, 200, 300, 400) ;
- la saisie tactile de valeurs de mesure sur la pièce à usiner (2),
- dans lequel un palpeur de mesure (10) est mis en contact avec la surface (6) de la pièce à usiner (2) et
- le palpeur de mesure (10) palpe la pièce à usiner (2) en contact avec la surface (6) le long du trajet de mesure prédéfini (100, 200, 300, 400) ;
- détermination par calcul de la grandeur géométrique mesurée et de l'écart théorique/réel de la grandeur géométrique mesurée à partir des valeurs mesurées dans le plan de référence (M1) ;
- le trajet de mesure prédéfini (100, 200, 300, 400) se trouvant au moins en partie en dehors du plan de référence (M1) et
- la course de mesure (100, 200, 300, 400) étant au moins par sections hélicoïdale, **caractérisé en ce que**
- la structure de surface (16) de la pièce à usiner présente des rainures (18),
- les rainures (18) sont au moins par sections hélicoïdales,
- les rainures (18) présentent une inclinaison et un sens de rotation par rapport au plan de référence (M1) et
- le trajet de mesure (100, 200, 300, 400) croise les rainures (18) et présente au moins par sections une inclinaison et/ou un sens de rotation
- que l'inclinaison et/ou le sens de rotation des rainures (18) sont déterminés à l'aide de paramètres de fabrication d'un usinage de pièce qui a précédé la mise à disposition de la pièce,
et/ou
- que l'inclinaison et/ou le sens de rotation des rainures (18) sont enregistrés avant et/ou pendant la mesure tactile.

2. Procédé selon la revendication 1,
**caractérisé en ce que**
- pendant la mesure tactile, deux ou plusieurs courses de mesure (200, 300, 400) sont balayées et
- ces courses de mesure (200, 300, 400) diffèrent en ce qui concerne un paramètre ou plusieurs des paramètres mentionnés ci-dessous : point de départ de la chemin de mesure, point final du chemin de mesure, longueur du chemin de mesure, sens de rotation du chemin de mesure, inclinaison du chemin de mesure.

3. Procédé selon la revendication 2,
**caractérisé en ce**
- **qu'**un premier trajet de mesure (200, 300, 400) et un deuxième trajet de mesure (200, 300, 400) sont prédéfinis,
- un point de départ du premier trajet de mesure (200, 300, 400) et un point de départ du deuxième trajet de mesure (200, 300, 400) se trouvant dans un plan de départ commun, le plan de départ étant notamment orienté parallèlement au plan de référence,
et/ou
- un point final du premier trajet de mesure (200, 300, 400) et un point final du deuxième trajet de mesure se trouvant dans un plan final commun, le plan final étant notamment orienté parallèlement au plan de référence,
et/ou
- le premier trajet de mesure (200, 300, 400) et le deuxième trajet de mesure (200, 300, 400) présentant un décalage angulaire l'un par rapport à l'autre.

4. Procédé selon l'une des revendications précédentes,
**caractérisé en ce**
**que** les valeurs mesurées enregistrées sont projetées sur le plan de référence (M1).

5. Procédé selon l'une des revendications précédentes,
**caractérisé en ce que**
- la pièce à usiner (2) tourne autour d'un axe longitudinal (A) pendant la mesure et/ou
- le palpeur de mesure (10) peut se déplacer librement dans toutes les directions de l'espace pendant la détection tactile des valeurs de mesure sur la pièce à usiner et n'est bloqué dans aucune direction de l'espace.
